# FASCICULE DE BREVET EUROPEEN

(11) **EP 0 687 999 B1**
(45) Date de publication et mention de la délivrance du brevet: **23.12.1998**
(21) Numéro de dépôt: 95401390.0
(22) Date de dépôt: 14.06.1995
(51) Int. Cl.: G07F 7/10

(54) **Carte à mémoire assurant la gestion des présentations successives et procédé de gestion de ces présentations**
Speicherkarte und Verfahren zur Verwaltung von aufeinanderfolgenden Eingaben
Memory card and method for successive input management

(30) Priorité: 15.06.1994 FR 9407313
(43) Date de publication de la demande: 20.12.1995
(73) Titulaire: SOLAIC (société anonyme), F-92800 Puteaux (FR)
(72) Inventeur: Thiriet, Fabien, 45100 Orleans (FR)
(74) Mandataire: Bugnon-Hays, Claudine

(56) Documents cités:
- EP-A- 0 298 831
- EP-A- 0 481 882
- WO-A-86/05613
- WO-A-92/18928
- FR-A- 2 674 647

## Description

La présente invention porte sur une carte à mémoire, assurant la gestion des présentations successives en provenance d'un lecteur de carte, pourvue d'au moins une mémoire et d'un circuit d'autorisation AUTO pour valider l'échange de données avec ledit lecteur, dotée de moyens d'enregistrement d'une valeur P et d'une valeur E émises par le lecteur et de moyens de comptage du nombre de mauvaises présentations successives Q, ce nombre étant initialement à 0 et étant augmenté d'une unité à chaque présentation mauvaise et remis à 0 à chaque présentation correcte, et dont la mémoire contient au moins :
- un premier espace-mémoire ou zone code-porteur pour mémoriser la donnée code-porteur CP ;
- un second espace-mémoire ou zone code-émetteur pour mémoriser la donnée code-émetteur CE ;
- un troisième espace-mémoire ou zone de présentation pour mémoriser la donnée nombre maximum de mauvaises présentations NMP ;
- un quatrième espace-mémoire ou zone d'accès pour mémoriser les résultats des présentations successives.

On connaît de telles cartes à mémoire dans lesquelles l'accès aux données présentes en mémoire est contrôlé par le circuit d'autorisation AUTO qui, suivant certains algorithmes, autorise ou refuse l'échange des données avec le lecteur de carte.

Lors d'un fonctionnement normal d'une carte avec des sécurités de type code confidentiel, la carte, avant d'autoriser les échanges de données avec le lecteur de carte, vérifie que le porteur est habilité à réaliser les transactions sur la carte. La présentation est l'ensemble des opérations réalisées par la carte, à la suite de l'envoi d'un code (porteur ou émetteur) par le lecteur, jusqu'à ce que celle-ci autorise ou non les échanges de données avec le lecteur.

Chaque présentation est réalisée en plusieurs phases :
- lecture du code porteur P envoyé par le lecteur ;
- vérification par le circuit d'autorisation qu'il existe un espace dans la zone d'accès où il pourra enregistrer le résultat de la demande d'accès ;
- comparaison par le circuit d'autorisation entre :
   * le code porteur envoyé par le lecteur, et
   * la donnée code porteur CP présente dans la zone code-porteur.

Dans le cas où les deux codes correspondent :
- la carte enregistre le résultat "bonne présentation" dans la zone d'accès ;
- le circuit d'autorisation autorise l'échange des données avec le lecteur.

La présentation est alors terminée.

Au contraire, si les codes sont différents :
- la carte enregistre le résultat "mauvaise présentation" dans la zone d'accès ;
- le circuit d'autorisation compare la quantité Q de mauvaises présentations successives à la donnée nombre maximum de mauvaises présentations NMP enregistré dans la zone de présentation.

Dans le cas où le nombre Q est inférieur à NMP, la carte demande à nouveau la présentation du code P par le lecteur.

Si au contraire le nombre Q est supérieur ou égal à NMP, le circuit d'autorisation :
- enregistre le résultat "quantité de tentatives d'accès successifs infructueux trop importante" dans la zone d'accès ;
- bloque la carte pour toute tentative d'accès par un porteur ;
- attend la présentation par un lecteur d'une "clé émetteur".

La présentation est alors terminée.

Lorsqu'ensuite la carte attend la présentation d'un code appelé "clé émetteur", dans le cas où la clé émetteur E présentée par le lecteur et la donnée code-émetteur CE contenue dans la zone émetteur ne sont pas identiques, le circuit d'autorisation enregistre le résultat "clé émetteur fausse" dans la zone d'accès et bloque définitivement les accès à la carte.

Si au contraire la clé émetteur E et le code émetteur CE sont identiques, le circuit d'autorisation autorise les échanges de la carte et du lecteur.

A l'heure actuelle, la gestion du quatrième espace-mémoire ou zone d'accès est rendue difficile pour diverses raisons.

D'une part, la zone d'accès a une capacité limitée, en raison notamment de sa taille et de sa structure ; d'autre part, le nombre maximum de mauvaises présentations NMP est au plus égal à 3 ; enfin, la durée de vie de la carte est réduite, car toute la place mémoire disponible n'est pas exploitée.

En effet, actuellement, la zone d'accès est divisée en quartets, soit des zones de 4 bits ; le circuit d'autorisation agit sur le premier quartet dont le premier bit n'est pas activé avant le début de la communication ; ce quartet, appelé quartet en cours, peut donc prendre les valeurs [1000], [0100], [0110], [1100], [1110] ou [0111], le 1 étant la convention employée pour symboliser un bit activé et le zéro pour symboliser un bit non activé.

Une présentation correcte mémorise un 1 dans le premier bit du quartet en cours soit [1000] et autorise la carte à dialoguer.

Puis, une mauvaise présentation mémorise un 1 dans le deuxième bit du nouveau quartet en cours, soit [1000,0100].

Ensuite, une deuxième présentation mauvaise mémorise à nouveau un 1 dans le troisième bit du quartet en cours, soit [1000,0110] ; si la deuxième présentation est correcte, on a alors [1000, 1100].

Une présentation bonne, après deux mauvaises présentations, mémorise un 1 dans le premier bit du quartet en cours, et autorise la carte à dialoguer, soit [1000,1110].

Une troisième présentation mauvaise, suite à deux autres présentations mauvaises, mémorise un 1 dans le quatrième bit du quartet en cours, soit [1000,0111] , la carte est alors invalidée.

Une telle carte à mémoire présente les inconvénients suivants :
- la zone d'accès a une capacité limitée et elle est gérée de manière linéaire ;
- lorsque le dernier quartet de la zone d'accès est inscrit, la carte est inutilisable pour des opérations ultérieures et doit être renouvelée ;

De plus, le mode de gestion actuel de la zone d'accès induit deux autres inconvénients :
- le nombre maximum de mauvaises présentations NMP est au plus égal à 3 ;
- la dimension de la zone d'accès étant limitée, la carte arrive rapidement à saturation.

Pour remédier à certains de ces inconvénients, il est connu, notamment du document WO-A-86/05613, d'affecter à l'espace-mémoire destiné à contenir les résultats des présentations successives une mémoire permanente, effaçable séquentiellement et réinscriptible, du type EEPROM. Cet espace-mémoire contient un quartet dont les bits sont initialement activés. Chaque mauvaise présentation provoque la désactivation d'un bit et le blocage de la carte survient lorsque trois bits sont désactivés. Le quartet est remis dans l'état initial par une bonne présentation avant le blocage de la carte et par une procédure particulière dans le cas contraire.

Une telle carte à mémoire permet de disposer d'un nombre théoriquement illimité d'utilisations de la carte, tout en y associant un espace-mémoire qui reste de taille restreinte.

Selon l'invention, on propose une gestion différente de la mémoire consistant à subdiviser celle-ci en une pluralité de pages dont la gestion est organisée de manière circulaire, c'est-à-dire qu'une page Pᵢ est physiquement équivalente à une autre page Pᵢ₊ₖ par une relation de congruence modulo k, une page étant par convention un ensemble de plusieurs bits, de préférence physiquement consécutifs ou voisins.

Une telle gestion circulaire signifie que les bits d'une page Pᵢ₊₁ sont activés après ceux de la page Pᵢ.

Ceci permet de réutiliser les pages antérieurement exploitées et qui sont devenues inutiles, en les effaçant préalablement.

Avantageusement, la mémoire M comporte en outre au moins une page supplémentaire constituant un cinquième espace-mémoire, non géré de manière circulaire.

Cet espace-mémoire supplémentaire est destiné par exemple à assurer la compatibilité avec des systèmes existants ou d'autres programmes.

Selon un perfectionnement de l'invention, la page Pₙ₊₂, appartenant au quatrième espace mémoire, est effacée avant l'écriture en page Pₙ₊₁, à savoir les bits de la page Pₙ₊₂ sont remis à zéro si et seulement si les deux conditions suivantes sont réalisées :
C₁ : la page Pₙ est terminée,
C₂ : le nombre Q est inférieur à NMP,
le test (C₁, C₂) étant réalisé après chaque présentation.

Ainsi, ceci permet, au moyen d'une zone d'accès de taille raisonnable, voire restreinte, de réutiliser des pages devenues inutiles tout en prenant soin de ne pas effacer de manière précitée une page qui pourrait comporter des informations nécessaires, telles que le nombre Q de mauvaises présentations atteint au moment de l'effacement.

Avantageusement, la réalisation de la condition C₁ s'effectue en contrôlant si au moins un bit est activé parmi les deux derniers bits de ladite page Pₙ.

Ceci est un test efficace permettant de vérifier si la page Pₙ est bien terminée.

L'invention porte également sur un procédé de gestion des présentations à une carte à mémoire telle que définie ci-dessus, les deux premiers bits de la zone d'accès de la carte ayant été placés à l'état actif avant la première mise en service de celle-ci, et qui comporte les étapes successives suivantes :
a) comparaison de ladite valeur P avec la donnée code-porteur CP ;
b) activation dans la zone d'accès du premier bit situé après un bit actif si P est égal à CP et activation du second bit situé après un bit actif si P est différent de CP ;
c) comparaison du nombre Q avec la donnée NMP ;
d) blocage de la carte si Q est égal à NMP et poursuite du traitement si Q est inférieur à NMP.

Avantageusement, le procédé de l'invention comporte en outre les étapes suivantes, lorsque le lecteur envoie un code émetteur :
e) comparaison de la valeur E avec la donnée CE ;
f) activation du troisième bit après le dernier bit actif si E est différent de CE, ce qui a pour conséquence de bloquer définitivement la carte ;
g) poursuite du traitement si E est égal à CE.

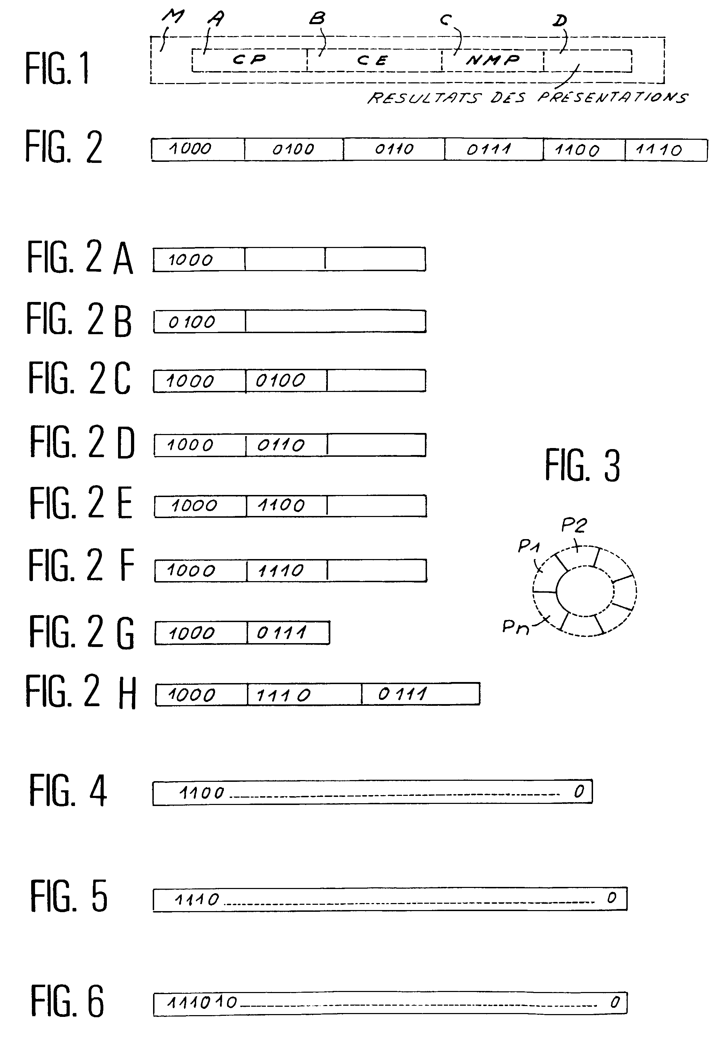

Un mode de réalisation de la présente invention va maintenant être décrit à titre d'exemple non limitatif en référence aux figures 1 à 14, qui sont des représentations schématiques de la mémoire M d'une carte à mémoire ou de divers espaces-mémoire d'une telle carte, pourvue en outre d'un circuit d'autorisation AUTO non représenté, pour valider l'échange de données en provenance d'un lecteur de carte.

On voit à la figure 1 une mémoire M contenant un premier espace-mémoire A ou zone code-porteur, pour mémoriser la donnée code-porteur CP, un second espace-mémoire B ou zone code-émetteur pour mémoriser la donnée code-émetteur CE, un troisième espace-mémoire C ou zone de présentation pour mémoriser la donnée nombre maximum de mauvaises présentations NMP, et un quatrième espace-mémoire D ou zone d'accès pour mémoriser les résultats des présentations successives.

Ainsi qu'il a été exposé, la zone d'accès D de l'art antérieur, représentée aux figures 2, 2A à 2H, est divisée en quartets, soit des zones de 4 bits ; le porteur de carte, qui souhaite l'utiliser pour effectuer, par exemple, une opération bancaire, introduit sa carte dans un lecteur de carte ; la carte, avant d'autoriser les échanges de données avec le lecteur de carte, vérifie que le porteur est habilité à réaliser les transactions sur la carte ; par convention, une présentation est l'ensemble des opérations réalisées par la carte, à la suite de l'envoi d'un code (porteur ou émetteur) par le lecteur, jusqu'à ce que celle-ci autorise ou non les échanges de données avec le lecteur.

Chaque présentation est réalisée en plusieurs phases :
- lecture par la carte d'un code porteur P envoyé par le lecteur ;
- vérification par le circuit d'autorisation AUTO qu'il existe un espace dans la zone d'accès où il pourra enregistrer le résultat de la demande d'accès ;
- comparaison par le circuit d'autorisation entre :
   * le code porteur P envoyé par le lecteur, et
   * la donnée code porteur CP présente dans la zone code-porteur.

Comme on l'a vu, le quartet en cours peut prendre les valeurs représentées à la figure 2.

Une première présentation correcte mémorise un 1 dans le premier bit du quartet en cours et autorise la carte à dialoguer, ainsi qu'il apparaît figure 2A ; une première présentation mauvaise mémorise un 1 dans le 2ème bit du quartet en cours ainsi qu'il apparaît figure 2B.

Une mauvaise présentation, suite à une première correcte, mémorise un 1 dans le deuxième bit du nouveau quartet en cours, ainsi qu'il apparaît figure 2C.

Ensuite, une deuxième présentation mauvaise mémorise un 1 dans le troisième bit du quartet en cours, ainsi qu'il apparaît figure 2D ; si la deuxième présentation est correcte, le premier bit du quartet en cours est activé, ainsi qu'il apparaît figure 2E.

Une présentation correcte, après deux présentations mauvaises, mémorise un 1 dans le premier bit du quartet en cours, et autorise la carte à dialoguer, ainsi qu'il apparaît figure 2F.

Une troisième présentation mauvaise, suite à deux autres présentations mauvaises, mémorise un 1 dans le quatrième bit du quartet en cours ainsi qu'il apparaît figure 2G ; la carte est alors invalidée.

La séquence suivante : une présentation correcte, deux mauvaises, une correcte, trois mauvaises, est représentée figure 2H.

Donc, dans l'art antérieur, le nombre maximum de présentations est égal à 3, au mieux.

Au contraire, la présente invention se propose d'employer une carte à mémoire dotée de moyens d'enregistrement d'une valeur P et d'une valeur E émises par le lecteur et de moyens de comptage du nombre de mauvaises présentations successives Q, ce nombre étant initialement à 0 et étant augmenté d'une unité à chaque présentation fausse et remis à 0 à chaque présentation correcte, dont la zone d'accès D est affecté à une mémoire M permanente, effaçable séquentiellement et réinscriptible, par exemple du type EEPROM.

De plus, ainsi que l'on a représenté à la figure 3, la mémoire M comporte une pluralité de pages (P₁, ..., Pᵢ, ..., Pₖ), k ≥ 3, dont la gestion est organisée de manière circulaire, c'est-à-dire qu'une page Pᵢ est physiquement équivalente à une autre page Pᵢ₊ₖ par une relation de congruence modulo k, une page étant par convention un ensemble de plusieurs bits, de préférence physiquement consécutifs ou voisins.

Pour prolonger la durée de vie de la carte, on a prévu un moyen avantageux d'effacement des pages devenues inutiles qui sera décrit plus loin.

Selon l'invention, le procédé de gestion des présentations à la carte à mémoire comporte les étapes suivantes, étant précisé qu'avant la mise en service de la carte, les deux premiers bits de la zone d'accès de la carte ont été placés à l'état actif, comme on le voit figure 4.

Lorsqu'un code-porteur P est envoyé par le lecteur, les cas suivants peuvent se présenter, conformément au procédé objet de l'invention :
1/ si le code-porteur P est égal à la donnée CP présente en zone A, le premier bit situé après le bit actif présent à la figure 4 est activé, comme on le voit figure 5 ;
2/ si le code-porteur P est faux, c'est-à-dire différent de la donnée CP, on a une première présentation mauvaise et le nombre Q, initialement à zéro, est porté à la valeur 1 ;
   - de plus, si la valeur de Q est inférieure à celle de la donnée NMP, le programme de gestion active le second bit situé après le bit actif, comme on le voit figure 6 ;
   - si au contraire la valeur de Q, soit 1, est égale à la valeur de NMP, la carte est bloquée pour le porteur de carte.

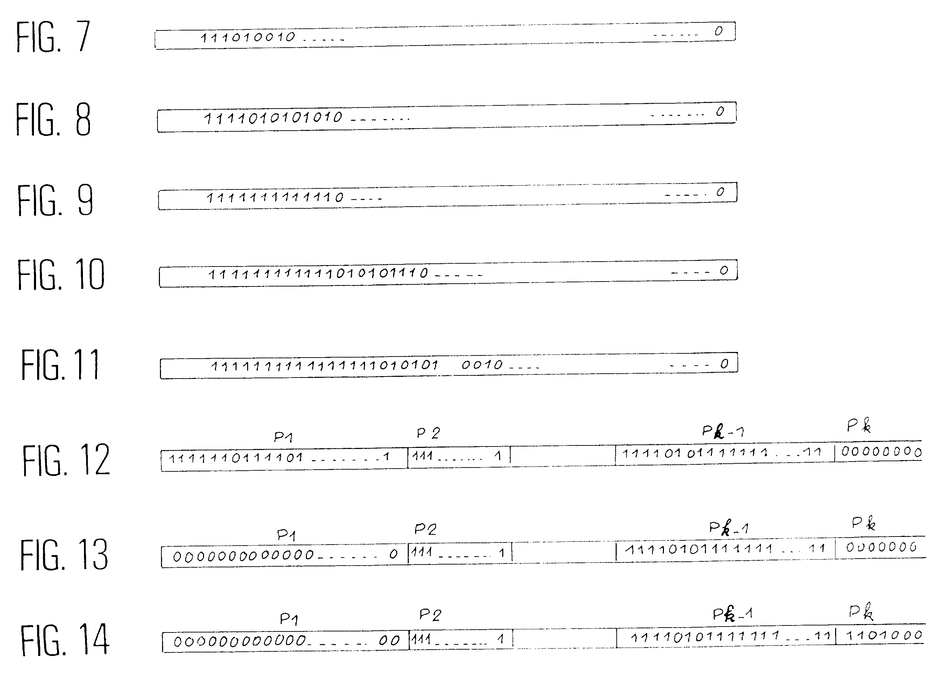

Dans ce dernier cas, l'organisme émetteur de la carte, par exemple la banque, doit présenter à son tour un code-émetteur code-émetteur E, dans le but de débloquer la carte ; ce E est comparé avec la donnée CE présente en zone B, et si le code-émetteur E est différent de la donnée CE, le troisième bit situé après le dernier bit actif est activé, comme on le voit figure 7 ; la carte est alors définitivement bloquée et inutilisable.

Si au contraire le code-émetteur E est correct, donc égal à la donnée CE, l'utilisation de la carte par le porteur peut être reprise, par exemple en activant les 2 bits suivants, pour replacer la carte dans la situation initiale.

D'autres exemples vont maintenant être décrit en référence aux figures suivantes, dans lesquelles :
- la figure 8 illustre l'activation des bits avec 2 présentations exactes suivies de 4 mauvaises présentations ; on voit bien ici que la donnée NMP est paramétrable ;
- la figure 9 illustre l'activation des bits avec 10 présentations successives exactes ;
- la figure 10 illustre la séquence suivante : 10 présentations successives exactes, puis 3 mauvaises, puis 2 exactes ;
- la figure 11 illustre la séquence suivante : 14 présentations correctes, 3 mauvaises présentations du porteur, 1 mauvaise présentation de l'émetteur, blocage définitif de la carte.

Par ailleurs, la gestion circulaire de la page de la mémoire, qui implique l'inscription des bits en page P₂, après la page P₁, et plus généralement en page Pₙ₊₁, après la page Pₙ, permet de réutiliser avantageusement les pages devenues inutiles en les effaçant, dans le cas où le nombre Q est inférieur à la donnée NMP, de la façon suivante : supposons que la page en cours Pₙ soit la page Pₖ₋₁, le programme d'autorisation contrôle après chaque présentation si au moins un bit est activé parmi les 2 derniers bits de la page Pₖ₋₁ (égal à Pₙ), comme on le voit figure 12.

La page Pₙ₊₂, avec (Pₙ₊₂ = P₁ car Pₙ₊₂ = Pₖ₋₁₊₂ = Pₖ₊₁ et Pₖ₊₁ = P₁ modulo k), est alors effacée, comme on le voit figure 13, et l'écriture en page Pₙ₊₁ est possible, comme on le voit figure 14.

Plus généralement, les bits d'une page Pₙ₊₂ sont remis à zéro si et seulement si Q reste inférieur à la donnée NMP et si la page Pₙ est terminée, ce contrôle étant effectué après chaque présentation.

Ceci permet d'utiliser la carte plus durablement, en réutilisant la mémoire de la zone d'accès.

La description ci-dessus est un exemple non limitatif de la carte et du procédé tels que définis dans les revendications.

## Revendications

1. Carte à mémoire, assurant la gestion des présentations successives en provenance d'un lecteur de carte, pourvue d'au moins une mémoire et d'un circuit d'autorisation AUTO pour valider l'échange de données avec ledit lecteur, dotée de moyens d'enregistrement d'une valeur P et d'une valeur E émises par le lecteur et de moyens de comptage du nombre de mauvaises présentations successives Q, ce nombre étant initialement à O et étant augmenté d'une unité à chaque présentation mauvaise et remis à 0 à chaque présentation correcte, et dont la mémoire contient au moins:
- un premier espace-mémoire ou zone code-porteur pour mémoriser la donnée code-porteur CP ;
- un second espace-mémoire ou zone code-émetteur pour mémoriser la donnée code-émetteur CE ;
- un troisième espace-mémoire ou zone de présentation pour mémoriser la donnée nombre maximum de mauvaises présentations NMP ;
- un quatrième espace-mémoire ou zone d'accès pour mémoriser les résultats des présentations successives, le quatrième espace-mémoire étant affecté à une mémoire (M) permanente, effaçable séquentiellement et réinscriptible, par exemple du type EEPROM ;
caractérisée en ce que la mémoire (M) permanente comporte une pluralité de pages P₁,..., Pᵢ, ..., Pₖ, K ≥ 3, dont la gestion est organisée de manière circulaire, c'est-à-dire qu'une page Pᵢ est physiquement équivalente à une autre page Pᵢ₊ₖ par une relation de congruence modulo k.

2. Carte à mémoire selon la revendication 1, caractérisée en ce que la mémoire (M) permanente comporte en outre au moins une page supplémentaire constituant un cinquième espace-mémoire non géré de manière circulaire, destiné par exemple à assurer la compatibilité avec des systèmes existants ou d'autres programmes.

3. Carte à mémoire selon la revendication 1 ou 2, dans laquelle la page Pₙ₊₂, appartenant au quatrième espace mémoire, est effacée avant l'écriture en page Pₙ₊₁, à savoir les bits de ladite page Pₙ₊₂ sont remis à zéro si et seulement si les deux conditions suivantes sont réalisées
C₁ : la page Pₙ est terminée,
C₂ : le nombre Q est inférieur à NMP,
le test C₁, C₂ étant réalisé après chaque présentation.

4. Carte à mémoire selon la revendication 3, caractérisée en ce que la réalisation de ladite condition C₁ s'effectue en contrôlant si au moins un bit est activé parmi les deux derniers bits de ladite page Pₙ.

5. Procédé de gestion des présentations à une carte à mémoire selon l'une quelconque des revendications précédentes, les deux premiers bits de ladite zone d'accès de la carte ayant été placés à l'état actif avant la première mise en service de celle-ci, comportant les étapes successives suivantes :
a) comparaison de ladite valeur P avec la donnée code-porteur CP ;
b) activation dans la zone d'accès du premier bit situé après un bit actif si P est égal à CP et activation du second bit situé après un bit actif si P est différent de CP ;
c) comparaison du nombre Q avec la donnée NMP ;
d) blocage de la carte si Q est égal à NMP et poursuite du traitement si Q est inférieur à NMP.

6. Procédé de gestion selon la revendication 5, caractérisé en ce que, la carte étant dans l'état bloqué, il comporte en outre les étapes suivantes :
e) comparaison de la valeur E avec la donnée CE ;
f) activation du troisième bit après le dernier bit actif si E est différent de CE, ce qui a pour conséquence de bloquer définitivement la carte ;
g) poursuite du traitement si E est égal à CE.

## Patentansprüche

1. Speicherkarte zur Verwaltung aufeinanderfolgender Eingaben seitens eines Kartenlesers, mit einem Speicher und einer Autorisierungsschaltung AUTO, um den Austausch von Daten mit dem genannten Leser gültig zu machen, mit Mitteln zum Registrieren eines Wertes P und eines Wertes E, die von dem Leser ausgesandt werden, und mit Zählmitteln zum Zählen der Anzahl Q aufeinanderfolgender fehlerhafter Eingaben, wobei diese Anzahl anfangs 0 ist und bei jeder fehlerhaften Eingabe um eine Einheit erhöht wird und bei jeder korrekten Eingabe auf 0 gesetzt wird, und wobei der Speicher der Speicherkarte mindestens enthält:
- einen ersten Speicherraum oder Trägercodebereich zum Speichern des vorgegebenen Trägercodes CP,
- einen zweiten Speicherraum oder Ausgabecodebereich zur Speicherung des Ausgabecodes CE,
- einen dritten Speicherraum oder Eingabebereich zur Speicherung der vorgegebenen maximalen Anzahl NMP von fehlerhaften Eingaben,
- einen vierten Speicherraum oder Zugriffsbereich zum Speichern der Ergebnisse aufeinanderfolgenden Eingaben, wobei der vierte Speicherraum einem Permanentspeicher (M) zugewiesen ist, der sequentiell löschbar und wieder beschreibbar ist und z.B. vom EEPROM-Typ ist,
dadurch **gekennzeichnet**, daß der Permanentspeicher (M) eine Mehrzahl von Seiten P₁,..., Pᵢ, ..., Pₖ, K ≥ 3 hat, deren Verwaltung in ringförmiger Weise organisiert ist, d.h. so, daß eine Seite Pᵢ durch eine Kongruenzbeziehung modulo k zu einer anderen Seite Pᵢ₊ₖ physisch äquivalent ist.

2. Speicherkarte nach Anspruch 1, dadurch **gekennzeichnet**, daß der Permanentspeicher (M) außerdem mindestens eine zusätzliche Seite umfaßt, die einen fünften Speicherraum bildet, der nicht in ringförmiger Weise verwaltet wird und beispielsweise dazu dient, die Kompatibilität mit bestehenden Systemen oder anderen Programmen zu gewährleisten.

3. Speicherkarte nach Anspruch 1 oder 2, dadurch **gekennzeichnet**, daß die Seite Pₙ₊₂, die zu dem vierten Speicherraum gehört, vor dem Beschreiben der Seite Pₙ₊₁ gelöscht wird, d.h. daß die Bits der Seite Pₙ₊₂ auf Null gesetzt werden, wenn und nur wenn die folgenden beiden Bedingungen erfüllt sind:
C₁: die Seite Pₙ ist abgeschlossen,
C₂: die Anzahl Q ist kleiner als NMP,
wobei C₁, C₂ nach jeder Eingabe überprüft werden.

4. Speicherkarte nach Anspruch 3, dadurch **gekennzeichnet**, daß die Erfüllung der genannten Bedingung C₁ dadurch gewährleistet wird, daß man prüft, ob mindestens ein Bit unter den letzten beiden Bits der genannten Seite Pₙ aktiviert ist.

5. Verfahren zum Verwalten der Eingaben an eine Speicherkarte nach einem der vorangegangenen Ansprüche, wobei die ersten beiden Bits des genannten Zugriffsbereichs der Karte vor dem ersten Einsatz derselben in den aktiven Zustand gesetzt werden, umfassend die folgenden aufeinanderfolgenden Schritte:
a) Vergleich des genannten Wertes P mit dem vorgegebenen Trägercode CP;
b) Aktivierung des ersten auf ein aktives Bit folgenden Bits in dem Zugriffsbreich, wenn P gleich CP ist und Aktivierung des zweiten auf ein aktives Bit folgenden Bits, wenn P von CP verschieden ist;
c) Vergleich der Anzahl Q mit dem gegebenen Wert NMP;
d) Sperren der Karte, wenn Q gleich dem Wert NMP ist und Fortführen des Verfahrens, wenn Q kleiner als NMP ist.

6. Verfahren nach Anspruch 5, dadurch **gekennzeichnet**, daß es für den Fall, daß die Karte gesperrt ist, ferner folgende Schritte umfaßt:
e) Vergleichen des Wertes E mit dem vorgegebenen Wert CE;
f) Aktivieren des dritten Bits nach dem letzten aktiven Bit, wenn E von CE verschieden ist, was zur Folge hat, daß die Karte endgültig gesperrt wird;
g) Fortsetzung des Verfahrens, wenn E gleich CE ist.

## Claims

1. A memory card that manages successive presentations from a card reader, the card being provided with at least one memory and an authorization circuit AUTO for validating data interchange with said reader, the card possessing means for recording a value P and a value E as issued by the reader, and means for counting the number Q of successive bad presentations, said number being initially zero and being increased by unity on each bad presentation, and being reset to zero on each correct presentation, the memory containing at least:
• a first memory space or bearer-code zone for storing the bearer code CP;
• a second memory space or issuer-code zone for storing the issuer code CE;
• a third memory space or presentation zone for storing the maximum number of bad presentations NMP; and
• a fourth memory space or access zone for storing the results of successive presentations, the fourth memory space being allocated to a memory (M) that is non-volatile, sequentially erasable, and rewritable, e.g. of the EEPROM type;
the card being characterized in that the non-volatile memory (M) includes a plurality of pages P₁, ..., Pᵢ, ... , Pₖ where k ≥ 3 organized to be managed in circular manner, i.e. a page Pᵢ is physically equivalent to another page Pᵢ₊ₖ by a modulo-k congruence relationship.

2. A memory card according to claim 1, characterized in that the non-volatile memory (M) further includes at least one additional page constituting a fifth memory space that is not managed in circular manner, e.g. for the purpose of providing compatibility with existing systems or other programs.

3. A memory card according to claim 1 or 2, in which the page Pₙ₊₂, belonging to the fourth memory space, is erased before writing in page Pₙ₊₁, i.e. the bits of said page Pₙ₊₂ are reset to zero if and only if the following two conditions are satisfied:
C₁: page Pₙ has been terminated;
C₂: the number Q is less than NMP;
with the test C₁, C₂ being performed after each presentation.

4. A memory card according to claim 3, characterized in that said condition C₁ is tested by checking whether at least one bit amongst the last two bits of said page Pₙ is activated.

5. A method of managing presentations of a memory card according to any preceding claim, the first two bits of said access zone of the card having been placed in the active state before the card is first put into operation, the method comprising the following successive steps:
a) said value P is compared with the bearer code CP;
b) the first bit situated after an active bit in the access zone is activated if P is equal to CP, and the second bit situated after an active bit is activated if P is not equal to CP;
c) the number Q is compared with the number NMP; and
d) the card is blocked if Q is equal to NMP, and processing is continued if Q is less than NMP.

6. A method according to claim 5, characterized in that, with the card in the blocked state, the method further comprises the following steps:
e) comparing the value E with the code CE;
f) activating the third bit after the last active bit if E is not equal to CE, thereby definitively blocking the card; and
g) continuing processing if E is equal to CE.
